# EUROPEAN PATENT APPLICATION

(11) **EP 4 817 957 A1**
(43) Date of publication of application: **07.10.2026**
(21) Application number: 26162655.0
(22) Date of filing: 05.03.2026
(51) Int. Cl.: B60R 7/08

(54) **RETAINING ARRANGEMENT FOR A VEHICLE STORAGE SYSTEM**

(30) Priority: 06.03.2025 SE 2550211
(71) Applicant: Klippan Safety AB, 264 21 Klippan (SE)
(72) Inventor: Winberg, Robin, 264 36 KLIPPAN (SE); Andersson, Christoffer, 261 73 HÄLJARP (SE)
(74) Representative: Ström & Gulliksson AB

(57) **Abstract**

Retaining arrangement for a vehicle storage system for a vehicle, wherein the retaining arrangement is configured to retain a drawer (20) of the vehicle storage in one or more retained positions in relation to a support structure (100) of the vehicle storage system, wherein the retaining arrangement comprises a retention portion (220), wherein the retention portion is configured to engage with a retention interface of the vehicle storage system and thereby retain the drawer in one of the one or more retained positions; a retaining member configured to be connected to the drawer and connected to the retaining arrangement; and a deformation arrangement (230) connecting the retaining member and the retention portion, wherein the deformation arrangement forms a weakened portion of the retaining arrangement.

## Description

### TECHNICAL FIELD

The present invention relates to a vehicle storage system and more precisely a retaining arrangement for a vehicle storage system, the retaining arrangement being configured to retain a drawer of the vehicle storage system.

### BACKGROUND

Storage solutions for heavy vehicles, for example commercial vehicles such as trucks, presents unique challenges due to the dual requirements of functionality and safety. Such storage solutions are commonly arranged inside the cabin of the vehicle. One concern related to these solutions is the risk posed by unsecured drawers or compartments during a collision or sudden stop of a vehicle. If a drawer faces outward into the cabin and is not properly restrained, it can become dislodged under the force of impact and risk harming a person or equipment in the cabin. This poses a significant threat to both drivers and potential passengers, as even small, lightweight items can cause injuries at high speeds.

To address this, mechanisms may be installed to secure such storage units. However, in a crash scenario, the drawer as well as the compartment may be severely deformed. Traditional latches may not suffice in such a scenario, necessitating the use of other forms of locking systems more capable of reducing the risk for the drawer dislodging and causing damage inside the cabin. For these mechanisms to be efficient it is preferable that they balance accessibility, allowing users to open and close the drawers easily during normal operation without compromising security.

There are remaining challenges with providing safe and easily usable retention systems for storage solutions in vehicles. Efficient retaining systems and reinforced designs may reduce the risk for storage units becoming a hazard during for example a collision and as such there is a need for new and improved retention systems.

### SUMMARY

According to a first aspect of the disclosure a retaining arrangement for a vehicle storage system for a vehicle is provided. The retaining arrangement is configured to retain a drawer of the vehicle storage system in one or more retained positions in relation to a support structure of the vehicle storage system, wherein the retaining arrangement comprises: a retention portion configured to engage with a retention interface of the vehicle storage system and thereby retain the drawer in one of the one or more retained positions, a retaining member configured to be connected to the drawer and connected to the retention portion, and a deformation arrangement connecting the retaining member and the retention portion, wherein the deformation arrangement forms a weakened portion of the retaining arrangement.

The first aspect of the disclosure may seek to address the problem of securely retaining a drawer in multiple positions while allowing for controlled deformation to reduce the risk for damage, components dislodging in a vehicle storage system in the event of a crash, collision etc.. The arrangement may be beneficial to improve reliability and durability of the retaining arrangement by allowing for controlled deformation at the deformation arrangement, thereby enhancing the ability of the retaining arrangement to withstand stress and maintain secure retention of the drawer. This may in turn improve driver and passenger safety and provide a retention system which is able to adhere to more strict regulations for vehicle storage systems. Furthermore, the reduced risk of internal damage to the vehicle storage system may reduce costly repairs and replacements.

According to one embodiment, the retaining arrangement is configured to absorb at least part of a kinetic energy of the drawer by deforming when the drawer is in said one or more retained positions. This may be beneficial at least to enhance the safety and durability of the vehicle storage system by reducing the forces on the drawer and the support structure as some energy will be absorbed by the deformation.

According to one embodiment, the deformation arrangement is configured to deform to absorb at least part of the kinetic energy of the drawer for mitigating movement of the drawer extending at least partially in an opening direction of the drawer. This may be beneficial at least to provide controlled energy absorption and mitigating movement associated with a risk of the drawer dislodging.

According to one embodiment, the retaining member extends around at least part of a front of the drawer and along at least part of a side of the drawer. This may be beneficial at least to increase the stability and the robustness of the retention of the drawer. Further, such a design may be associated with a reduced risk for the drawer dislodging.

According to one embodiment, the retaining member extends around the front of the drawer and along at least part of both sides of the drawer. This may be beneficial at least to offer enhanced structural support and prevent lateral movement of the drawer. Further, such a design may be associated with a reduced risk for the drawer dislodging.

According to one embodiment, the retaining arrangement comprises a first and second retention portion and a first and second deformation arrangement configured to be arranged on a first and second side of the drawer, respectively, wherein the second side is opposite to the first. This may be beneficial at least to provide balanced force distribution and improved retention on both sides of the drawer, enhancing overall system stability and reduction of any torque on the drawer.

According to one embodiment, the retention portion is configured to be pivotably connected to the drawer and the retention portion is fixedly connected to the retaining member such that pivoting of the retaining member causes the retention portion to disengage from the retention interface when the drawer is in one of the one or more retained positions. This may be beneficial at least to facilitate easy and controlled disengagement of the drawer from a retained position, improving user convenience and safety of the retaining arrangement.

According to one embodiment, the retaining arrangement comprises a handle connected to the retaining member and the retaining member is actuatable by said handle for disengaging the retention portion from the retention interface when the drawer is in one of the one or more retained positions. This may be beneficial at least to allow for user-friendly operation and quick access to the drawer contents. It may also facilitate a disengagement of the retaining arrangement which is intuitive for a user and does not disrupt normal use of the vehicle storage system.

According to one embodiment, one of the retention portion and the retention interface comprises a retention element, and the other of the retention portion and the retention interface comprises a recess, wherein the recess is configured to retain the retention element in one of the one or more retained positions. This may be beneficial at least to provide a secure and reliable mechanical engagement, reducing the risk for the drawer dislodging under various conditions.

According to one embodiment, the one or more retention interfaces are formed along a track of the support structure of the vehicle storage system and the drawer is movably mounted to said track. This may be beneficial at least to enable smooth and controlled movement of the drawer, reducing wear and tear on the components.

According to one embodiment, the retention portion is configured to be movably guided in the track.

According to one embodiment, the deformation arrangement comprises a first portion connected to the retaining member.

According to one embodiment, the deformation arrangement comprises a connection interface configured to fixedly connect the retention portion to the deformation arrangement.

According to one embodiment, the first portion of the deformation arrangement comprises a slot extending a distance in the opening direction, wherein the retention portion is configured to extend through the slot and at least part of the distance of the slot extends between the retention portion and the folding axis. This may be beneficial at least to enable the deformation arrangement to be deformed to a higher degree for absorbing at least part of the kinetic energy of the drawer.

According to one embodiment, the deformation arrangement further comprises a second portion connected to the retention portion.

According to one embodiment, the first portion forms an extension of the retention portion.

According to one embodiment, the deformation arrangement is folded at a folding axis, wherein the folding axis is at least partially orthogonal with the opening direction and wherein the second portion is folded relative to the first relative to the folding axis and the second portion comprises the connection interface. This may be beneficial at least to enable the deformation arrangement to be deformed to a higher degree for absorbing at least part of the kinetic energy of the drawer.

According to one embodiment, the deformation arrangement has a folded extension extending between the retention portion and the folding axis, wherein the folded extension extends at least partially in the opening direction

According to a second aspect of the disclosure a vehicle storage system is provided. The vehicle storage system comprising a drawer, a retaining arrangement according to any embodiment of the first aspect of the disclosure, and a support structure, the support structure being configured to be arranged in a compartment of a vehicle storage unit. The second aspect of the disclosure may seek to address the problem of securely retaining a vehicle drawer, allowing for controlled deformation to prevent damage or failure of the vehicle storage system. A technical benefit may include improved reliability and durability of the vehicle storage system by allowing for controlled deformation at the weakened portion, thereby enhancing the system's ability to withstand stress, mitigate movement of the drawer and maintain secure retention of the drawer.

According to one embodiment, the support structure of the vehicle storage system comprises a track and the drawer is configured to move along the track to move between an opened and closed position. This may be beneficial at least to facilitate smooth and controlled movement of the drawer, enhancing user convenience and reducing wear on the system components.

According to one embodiment, the support structure comprises the one or more retention interfaces, and wherein the support structure is configured to be arranged on an inner surface of the compartment of the vehicle storage unit. This may be beneficial at least to provide a secure and integrated mounting solution, ensuring stability and reliability of the storage system within the vehicle cabin.

According to a third aspect a vehicle storage unit for a vehicle cabin of a vehicle is provided. The vehicle storage unit comprising a frame, one or more compartments formed in the frame and one or more vehicle storage systems arranged in one or more of the one or more compartments. The third aspect of the disclosure may seek to address the problem of securely retaining a vehicle drawer in multiple positions in a vehicle storage unit, allowing for controlled deformation to prevent damage or failure of the vehicle storage unit. A technical benefit may include improved reliability and durability of the vehicle storage system by allowing for controlled deformation at the weakened portion, thereby enhancing the system's ability to withstand stress and maintain secure retention of the drawer in the one or more retained positions.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 depicts a front view of a vehicle storage unit according to one embodiment.
Figs 2A-2B depict views of a vehicle storage system with a drawer in a closed position according to one embodiment.
Figs. 3A-3B depict views of a vehicle storage system with a drawer in a partially opened position according to one embodiment.
Fig. 4 is an isometric view of a deformation arrangement of a retaining arrangement according to one embodiment.
Fig. 5 is a top view of a of a deformation arrangement of a retaining arrangement according to one embodiment.
Fig. 6 is an isometric view of a deformation arrangement of a retaining arrangement according to one embodiment.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The term "coupled" is defined as connected, although not necessarily directly, and not necessarily mechanically. Similarly, the term "connected", or "operatively connected", is defined as connected, although not necessarily directly, and not necessarily mechanically. Two or more items that are "coupled" or "connected" may be integral with each other. The terms "a" and "an" are defined as one or more unless this disclosure explicitly requires otherwise. The terms "substantially", "approximately" and "about" are defined as largely, but not necessarily wholly what is specified, as understood by a person of ordinary skill in the art. The terms "comprise" and any forms thereof, "have" and any forms thereof, "include" (and any form thereof ) and "contain" (and any forms thereof) are open-ended linking verbs. As a result, a method that "comprises", "has", "includes" or "contains" one or more steps, possesses those one or more steps, but is not limited to possessing only those one or more steps.

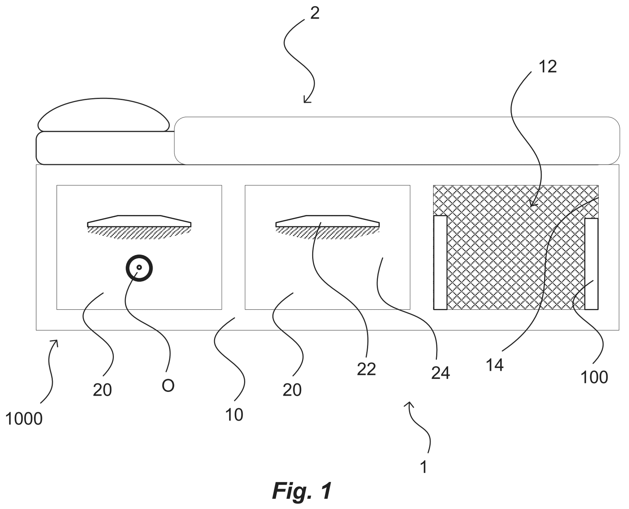

Starting with Fig. 1 an exemplary embodiment of a vehicle storage unit 1 for a vehicle cabin is depicted. The vehicle cabin may be a cabin of any type of vehicle. For example, the vehicle may be a heavy vehicle such as a commercial vehicle., e.g. truck. The vehicle storage unit 1 may be arranged inside the cabin. For example, the vehicle storage unit may be arranged behind the seats relative to the extension of the vehicle. The vehicle storage unit 1 in the exemplary embodiment of Fig. 1 is used as a base for a bed 2. The vehicle storage unit 1 may thus form a part of a base of the bed 2. This may be beneficial for efficient space utilization in the vehicle cabin. Such a vehicle storage unit is particularly common for trucks.

The vehicle storage unit 1 comprises a frame 10, one or more compartments 12 formed in the frame 10 and one or more vehicle storage systems 1000 configured to be arranged in the one or more compartments 12.

Each of the one or more vehicle storage systems 1000 may comprise a drawer 20. The storage system 1000 may comprise a handle 22 to enable movement of the drawer 20. As will be described in further detail, the handle 22 may be fixed directly to the drawer 20 or may form a part of a mechanism for retaining the drawer 20.

The vehicle storage system 1000 comprises a support structure 100 configured to be arranged in a compartment 12 of the vehicle storage unit 1. In the exemplary embodiment of Fig. 1, the vehicle storage unit 1 comprises a plurality of drawers 20 and a plurality of compartments 12. In the depicted embodiment, each drawer 20 is arranged in a respective compartment 12. It may however be envisioned that multiple drawers 20 are arranged in a single compartment,

In the exemplary embodiment of Fig. 1 the rightmost compartment 12 of the vehicle storage unit 1 is depicted with the drawer 20 removed and with a first and second support structure 100 arranged on a first and second inner wall 14 of the compartment 12, wherein the first and second inner walls 14 of the compartment 12 are opposite each other. The support structure 100 may be fixedly arranged in the compartment 12 with fastening means. For example, mechanical fasteners, adhesive or bonding methods, interlocking mechanisms and/or welded connections. The support structure 100 may alternatively be integrally formed with the compartment 12. As will be explained further, the support structure 100 may for example be intended to guide and/or support the drawer 20 in the compartment 12.

The drawer 20 may be configured to be opened in an opening direction O. The drawer 20 may be arranged in the compartment 12 such that the opening direction O faces into the vehicle cabin. In one example, the opening direction O of the drawer 20 may be substantially horizontal. In one example, the opening direction O of the drawer 20 may be at least partially parallel with a direction of travel of the vehicle.

A rapid deceleration of the vehicle may result in a difference in kinetic energy between the support structure 100 and the drawer 20. The support structure 100 may be fixedly attached to the vehicle storage unit 1 which in turn may be fixedly attached to the vehicle. The support structure 100 may therefore decelerate in unison with the vehicle. The drawer 20 may be configured to be movable in relation to the support structure 100 (between an opened and closed position). If the drawer 20 is not retained in a retained position in relation to the support frame 100 it may therefore not decelerate in unison with the support structure 100. The kinetic energy of the drawer 20 relative the support structure 100 may be at least partially in the opening direction O. The relative kinetic energy of the drawer 20 may result in the drawer 20 (if not properly retained) becoming dislodged from the compartment 12 and propelling into the vehicle cabin, posing a potential danger to persons in the vehicle cabin and/or important equipment. How the energy absorption of the kinetic energy of the drawer 20 is distributed is another potential challenge. Poor distribution of the energy absorption may lead to damage to the internal structure of the support structure 100 and/or the vehicle storage unit 1. To avoid dangerous dislodging or internal damage to the vehicle storage unit 1, the vehicle storage system 1000 may comprise a retaining arrangement 200 to improve the safety of the retention of the drawer 20. This will be described in further detail in reference to later figures.

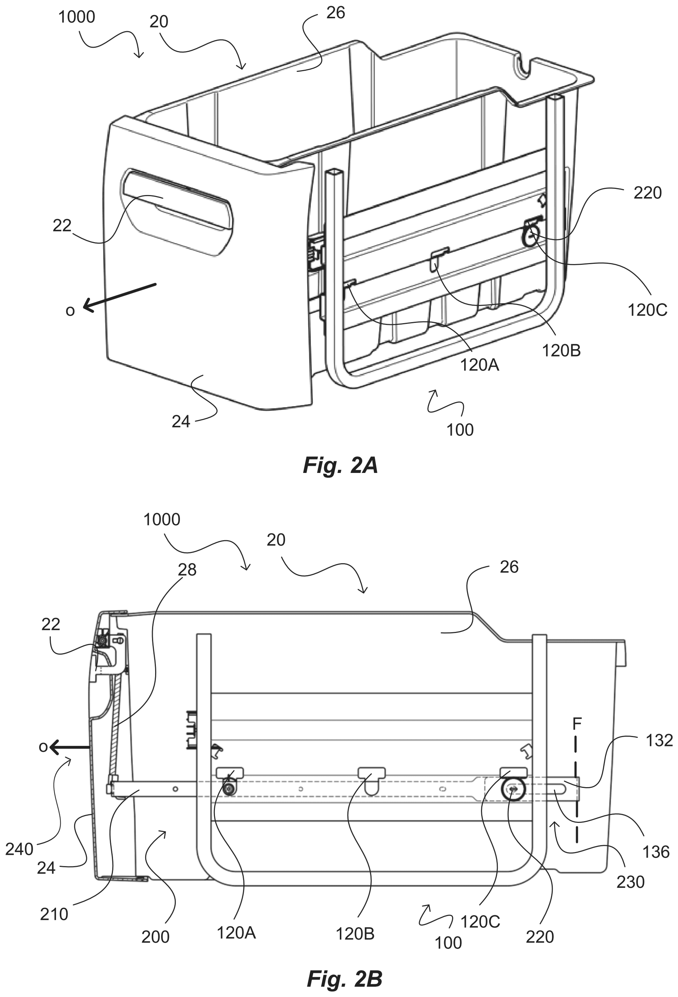

In Figs. 2A-2B an exemplary embodiment of a vehicle storage system 1000 is depicted. The vehicle storage system 1000 comprises a drawer 20, a support structure 100 configured to be arranged in a compartment 12 of a vehicle storage unit 1. The vehicle storage system 1000 further comprises a retaining arrangement 200.

The retaining arrangement 200 is for a vehicle storage system 1000 for a vehicle. The retaining arrangement 200 is configured to retain a drawer 20 of the vehicle storage system 1000 in one or more retained positions in relation to the support structure 100 of the vehicle storage system 1000. The retaining arrangement 200 comprises a retention portion 220, wherein the retention portion 220 is configured to engage with a retention interface 120A-C of the vehicle storage system 1000 and thereby retain the drawer 20 in one of the one or more retained positions. The retaining arrangement 200 comprises a retaining member 210 configured to be connected to the drawer 20 and connected to the retention portion 220. The retaining arrangement 200 further comprises a deformation arrangement 230 connecting the retaining member 210 and the retention portion 220, wherein the deformation arrangement 230 forms a weakened portion of the retaining arrangement 200.

Commonly, the drawer 20 is in a relatively deformable material such as a polymeric material. Further, the support structure 100 often comprises parts in a more rigid material such as a metal material such as steel or aluminium. In the event of a collision or crash of the vehicle, the drawer 20 will deform to a high degree in relation to the support structure 100. This will with a conventional retaining arrangement be associated a risk of the deformation of the drawer 20 causing the retaining arrangement to release the drawer 20 from its retained position and dislodge the drawer 20 and either cause the drawer 20 to move freely in the cabin or cause large structural damage to the vehicle storage unit 1. The weakened portion may reduce the risk for this to occur due to it being capable of absorbing at least some of the kinetic energy from the drawer 20.

The deformation arrangement 230 may be configured to remain rigid under normal use of the drawer 20. The deformation arrangement may even remain rigid during rough handling of the drawer 20 by a user. The deformation arrangement 230 may be configured to deform during a crash event, such as a vehicle collision or accident wherein a vehicle comes to an abrupt stop. In such events, as described previously there is a risk of the drawer 20 becoming dislodged. Hence, the deformation arrangement 230 may be configured to deform as a result of a load associated with a crash event. Further, the deformation arrangement 230 may be configured to be remain rigid in response to being exerted by a load associated with normal use, i.e. a load lower than a load associated with a crash event. Hence, the deformation arrangement 230 is configured to be sufficiently rigid to not deform during normal use and/or in response to a load associated with normal use of the drawer 20.

Worded differently, the deformation arrangement 230 may be configured to only deform if the kinetic energy of the drawer 20 absorbed by the deformation arrangement 230 exceeds a threshold, e.g. is subjected to a load exceeding a certain level. It may be preferable that the kinetic energy of the drawer 230 associated with normal use does not exceed this threshold. Thus, the deformation arrangement 230 may be configured such that the deformation arrangement does not deform and/or only deform elastically when subjected to loads associated with normal and intended use of the drawer 20. For example, the deformation arrangement 230 may not be deformed by a user engaging and disengaging the retaining arrangement 200 to open and/or close the drawer 20. The threshold for the kinetic energy absorption, e.g. the load exerted on the deformation arrangement 230, needed to cause deformation of the deformation arrangement 230 to a sufficient level may be associated with an abrupt deceleration of the vehicle, uncontrolled deformation of the drawer 20 and/or a kinetic energy absorption which would otherwise risk damage to the support structure 100 of the vehicle storage system 1000.

The deformation arrangement 230 may be configured to absorb at least part of a kinetic energy of the drawer 20 by deforming when the drawer 20 is in the one or more retained positions. Hence, the deformation arrangement 230 may be configured to redistribute kinetic energy from the drawer 20 by means of deformation upon the drawer 20 being subjected to non-controlled loads when the drawer 20 is in the one or more retained positions. The deformation of the deformation arrangement 230 may thereby improve the control of the kinetic energy absorption of the drawer 20. The more controlled energy absorption may decrease the risk of dislodging of the drawer 20 and/or the risk of internal damage to the vehicle storage unit 1.

As aforementioned, the deformation of the deformation arrangement 230 may be configured to absorb at least part of the kinetic energy of the drawer 20. The deformation arrangement 230 may be configured to deform to absorb at least part of the kinetic energy of the drawer 20 for mitigating movement of the drawer 20. The movement may preferably be movement at least partially in the opening direction O of the drawer 20.

The weakened portion is to be formed such that it will in response to the retaining arrangement 230 being subjected to a load by at least one of, and preferably both of, the drawer 20 and the support structure 100, deform to a larger degree than said at least one of the retention portion 220 and support structure 100.The weakened portion may thus comprise at least one deformable member configured to deform to a larger degree than said at least one of the retention portion 220 and support structure 100 upon being subjected to the same load.

The deformation arrangement 230 may form a weakened portion in a number of ways. Accordingly, the weakened portion may be achieved in a plurality of ways. It may be preferable that the dimensions and material qualities of the weakened portion are adapted such that the weakened portion is rigid during normal use of the drawer 20, but is deformable under the conditions of a crash event.

In one example, the deformation arrangement 230 may form a weakened portion of the retaining arrangement 200 by being formed in material that is more deformable than the retaining member 210 upon being subjected to the same load. Additionally or alternatively, the weakened portion may be formed in a material that is more deformable than the retention portion 220. For example, a material with a lower Young's modulus and/or lower yield strength may be used for the deformation arrangement 230. At least part of the deformation arrangement 230 may thus be in a material with a Young's modulus and/or lower yield strength at least one of the retention portion 220 and support structure 100. It may also be envisioned that the deformation arrangement 230 may comprise a tension spring (such as a gas or coiled tension spring) and/or an elastic material. The at least one deformable member may thus comprise said tension spring and/or elastic material.

The deformation arrangement 230 may be weakened relative the retaining member 210 by forming the deformation arrangement 230 as thinner than the retaining member 210. The at least one deformable member may thus be thinner than at least one of the retaining member 210 and the retention portion 220. The deformation arrangement 230 may be weakened by including cutouts or patterns to weaken the deformation arrangement 230. The at least one deformable member may thus comprise a cutout or pattern. The deformation arrangement 230 may also be weakened by arranging the deformation arrangement 230 so that it comprises at least one fold (or bend) so that the deformation arrangement 230 has an extent which is not parallel with the opening direction O. The deformation arrangement 230 may be weakened by comprising at least one fold or bend such that the extent of the deformation arrangement 230 is not linear. The at least one deformable member may thus comprise such an at least one fold or bend. Notably, such a fold or bend may constitute a weakened portion at least in one direction, for example in a direction extending substantially orthogonal to the folding axis or bending axis of the fold or bend.

It may be preferable that the deformation arrangement 230 may be at least partially integrally formed with the retaining member 210. The deformation arrangement 230 may be at least partially formed as an extension of the retaining member 210. Integrally forming the deformation arrangement 230 with the retaining member 210 reduces the need for joints which may reduce the complexity of the arrangement. In situations with strong forces and/or large energy transfer joints may form weak points of an arrangement. By reducing the number of joints of the retaining arrangement 200 the retaining arrangement 200 may become more resilient and thereby improve safety.

As can be more clearly seen in Fig. 2B the retention portion 220 in this exemplary embodiment is engaged with one of the one or more retention interfaces 120C. When the retention portion 220 of the retaining arrangement 200 is engaged with one of the one or more retention interfaces 120A-C the retaining arrangement 200 may be said to be engaged. The drawer 20 in this exemplary embodiment is in one of the one or more retained positions. It may be beneficial that the retention portion 220 being engaged with the innermost retention interface 120C coincides with a fully closed position of the drawer 20. It may be more intuitive for a user to have the drawer 20 in a fully closed position when driving or not actively accessing objects stored in the drawer 20. Therefore, having a fully closed position of the drawer 20 coincide with a retained position of the drawer 20 may improve the intuitiveness of the retaining arrangement 200. The retaining arrangement 200 may automatically enter the retained position when the drawer 20 is fully closed.

A retained position may herein refer to a retained position relative the support structure 100, e.g. a position wherein the drawer 20 is retained relative to the support structure 100. More details of this will be provided in reference to later figures.

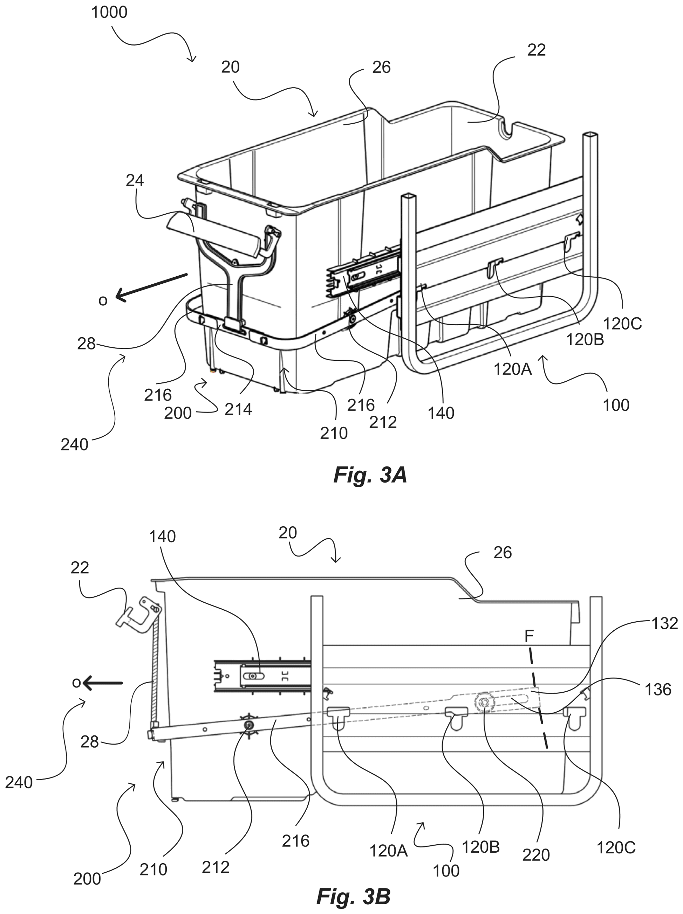

As will be described with reference to Figs. 3A-B, the handle 22 may form part of the retaining arrangement 200. The handle 22 may be actuatable to disengage the retention portion 220 from the retention interface 120A-C to thereby release the drawer 20 from the retained position. As will further be explained, the handle 22 may be connected to the retaining member 210 via a linkage member 28.

As can be seen in Figs. 2A-2B the drawer 20 may comprise a drawer front cover 24 arranged at the front of the drawer 20. The drawer front cover 24 may be arranged around the linkage member 28 and at least a portion of the retaining member 210. The drawer front cover 24 may protect the linkage member 28 and the retaining member 210 by shielding them from the outside of the vehicle storage system 1000. The handle 22 may extend through an opening of the drawer front cover 24 such that it is accessible from the front of the drawer 20.

In Fig. 2B it can also be seen that the retaining member 210 extends along at least part of the side of the drawer 20. The side of the drawer 20 may extend along the opening direction O. In the depicted example, the retaining member 210 may at least partially extend parallel to the opening direction.

The retention portion 220 and the retention interface 120A-C may comprise a retention element, and the other of the retention portion 220 and the retention interface 120A-C may comprise a recess, wherein the recess is configured to retain the retention element in one of the one or more retained positions.

In Fig. 2B, the one or more retention interfaces 120A-C comprises the recesses and the retention portion 220 comprises the retention element. It may however be envisioned that the recesses form a part of the retention portion and the retention element form a part of the retention interface 120. More details of the recesses and retention element will be given in reference to later figures.

In Figs. 3A-3B it can be seen that the retaining member 210 extends around at least part of a front of the drawer 20 and along at least part of the side of the drawer 20. In this exemplary embodiment the side of the drawer 20 is at least partially parallel with the opening direction O and the front of the drawer 20 is at least partially perpendicular with the opening direction O.

The retaining member 210 may extend around the front of the drawer 20 and along at least part of both sides of the drawer 20, e.g. a first and second side of the drawer 20. The first and second side may be opposite to each other. The first and second side may extend along the opening direction O. The first and second side may extend substantially orthogonally to the front of the drawer 20.

The retaining member 210 may comprise a front portion 214 extending along at least part of the front of the drawer 20. The retaining member may comprise a side portion 216 extending along at least part of the side of the drawer 20 and at least part of the front of the drawer 20. The side portion 216 may be connected at one end to the front portion 214. The side portion 216 may be connected to the deformation arrangement at the end opposite to the end connecting to the front portion 214. It is easily realised that the front portion 214 may alternatively extend along the front of the drawer 20 and at least partially along the side of the drawer 20 while the side portion 216 may extend along at least part of the side of the drawer 20. The front portion 214 and side portion 216 of the retaining member 210 may be integrally formed with each other.

Preferably, the retaining member 210 may be formed as a U-bracket wrapping around the front of the drawer 20. Thus, retaining member 210 may comprise a first side portion 216 extending along the first side of the drawer 20 and a second side portion 216 extending along the second side of the drawer 20. The first and second side portion 216 may each be connected to the front portion 214.

The retaining arrangement 200 may comprise a first and second retention portion 220 and a first and second deformation arrangement 230 configured to be arranged on the first and second side of the drawer 20, respectively, wherein the second side is opposite to the first. The symmetry of the retaining arrangement 200 may improve the integrity of the retaining arrangement 200 by improving force distribution and reducing the risk of torque forces straining the components of the retaining arrangement 200.

The front portion 214 of the retaining member 210 may be connected to the linkage member 28.

The retaining arrangement 200 may comprise the handle 22 connected to the retaining member 210 and the retaining member 210 may be actuatable by said handle 22 for disengaging the retention portion 220 from the retention interface 120A-C when the drawer 20 is in one of the one or more retained positions.

The retention portion 220 may be configured to be pivotably connected to the drawer 20 and the retention portion 220 may be fixedly connected to the retaining member 210 such that pivoting of the retaining member 210 causes the retention portion to disengage from the retention interface 120A-C when the drawer 20 is in one of the one or more retained positions. The retention portion 220 may be configured to be pivotable about a pivot axis extending substantially orthogonal to the opening direction.

The retaining member 210 may comprise a pivot connection 212. The pivot connection 212 may be configured to be connected to the drawer 20. The pivot connection 212 may be configured to pivotably connect the retaining member 210 and the drawer 20. The retaining member 210 may be pivotable relative said pivotable connection 212. A user actuating the handle 22 may result in the linkage member 28 pivoting the retaining member 210 and thereby the retention portion 220.

Accordingly, actuation of the handle 22 may cause movement of the linkage member 28, in turn causing pivoting of the retaining member 210. The pivoting of the retaining member 210 prompts movement of the retention portion 220 out of engagement with the retention interface 120, whereby the drawer 20 is released from the retention position. In the depicted example, actuation of the handle 22 causes the linkage member 28 to move downwards forcing a front part of the retaining member 210 downwards and a second part of the retaining member 210 upwards. The first part may be arranged at a first side of the pivot connection 212 and the second part may be arranged at a second side of the pivot connection 212 opposite to the first. The retention portion 220 will thus be lifted out of engagement with the retention interface 120.

In the embodiments of Figs. 3A-3B the retaining arrangement is brought out of engagement with the support structure 100 by actuating a handle 22. The handle 22 can be said to be an actuator. In alternative embodiments other forms of actuators may be used, for example The retaining arrangement 200 may further comprise a a push-button, a lever, a slide, or a rotating knob. In an alternative embodiment, the actuator could be an electro-mechanical device, such as a solenoid, activated by a switch.

The handle 22 and linkage member 28 may be considered an exemplary embodiment of a disengagement mechanism 240.

When actuated by a user, the disengagement mechanism 240 may be configured to cause the retention arrangement 200 to become disengaged from the support structure 100. The disengagement mechanism 240 may be configured to cause the retention portion 220 to become disengaged from the retention interface 120A-C of the support structure 100. The disengagement may, for example, be achieved by causing the retaining member 210 to pivot. Pivoting the retaining member 210 may in turn move the retention portion 220 out of engagement with the retention interface 120A-C. The disengagement mechanism 240 may thereby enable movement of the drawer 20 between the opened and closed positions.

Furthermore, the retaining arrangement 200 may automatically return to a retained position when the disengagement mechanism is not actuated. For example the retaining arrangement 200 may be biased by gravity towards a retained position wherein the retention portion 220 is engaged with a retention interface 120A-C when the disengagement mechanism is not actuated. This may enable the drawer 20 to be securely retained as it is moved into a retained position, without requiring a separate locking action from the user.

The vehicle storage system 1000 may comprise a track 110. Advantageously, the support structure 100 may comprise the track 110. The drawer 20 may be configured to move along the track 110 enabling the drawer 20 to move between an opened and closed position. In one embodiment, the drawer 20 may be configured to slide along the track 110. It may however also be envisioned that the drawer 20 is provided with wheels for rolling engagement with the track 110 or that the retention portion 220 is provided as a wheel for engagement with said track 110.

The retention portion 220 may be configured to be movably guided in the track 110. Preferably, the retention portion 220 may be configured to be slidably guided in said track 110. Thus, upon movement of the drawer 20 relative the support structure 100, the retention portion will be guided by means of movably engaging with the track 110.

The one or more retained positions of the drawer 20 may be configured to be at or between the fully closed and the fully opened position of the drawer 20. The one or more retained positions may be defined by the location of the one or more retention interfaces 120A-C.

The one or more retention interfaces 120A-C may be formed along the track 110 of the support structure 100 of the vehicle storage system 1000 and the drawer 20 may be slidably mounted to said track 110 via the retaining arrangement 200.

The one or more retention interfaces 120A-C may comprise recesses in the track 110 configured to receive the retention portion 220 when it slides over one of the one or more retention interfaces 120A-C. The retention portion 220 may be configured to enter one or more of the retention interfaces 120A-C and thereby be retained in one of the one or more retained positions if the handle is not actuated. The retaining arrangement 200 may thereby enable passive retention of the drawer 20 in the one or more retained positions, minimizing the steps to a secure retention of the drawer 20.

The retaining arrangement 200 may be removable from the support structure 100 of the vehicle storage system 1000 by keeping the handle actuated and sliding the retention portion 220 in the opening direction O at least past the outermost retention interface 120A-C.

The opening direction O may be considered a horizontal direction. The track 110 may thus extend in a horizontal direction. The one or more retention interfaces 120A-C may be provided as recesses in a horizontally extending surface of the track 110. The weight of the drawer 20 and the retaining member 210 may thus cause the retention portion 220 to fall down into engagement with the recess. The engagement may as aforementioned be releasable by means of lifting of the retention portion 220 by actuation of the handle 22.

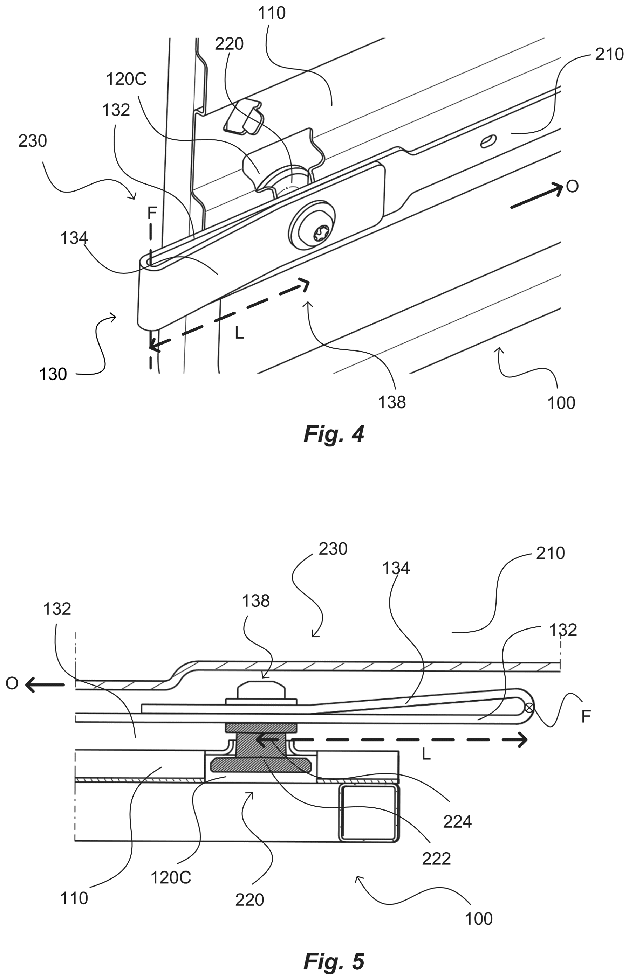

Fig. 4 depicts a detailed perspective view of an exemplary embodiment of the deformation arrangement 230.

The deformation arrangement 230 may comprise a connection interface 138 for fixedly connecting the retention portion 220 to the deformation arrangement 230. The connection interface 138 may be configured to receive any suitable fastener such as a rivet, screw, bolt or adhesives for fixedly connecting the retention portion 220 to the deformation arrangement 230. Preferably, the connection interface 138 may be formed as a hole for receiving fastening element such as a screw, bolt or rivet.

The deformation arrangement 230 may comprise a first portion 132 connected to the retaining member 210. The first portion 132 may form an extension of the retaining member 210. In one example, the first portion 132 may be integrally formed in the retaining member 210.

In the depicted example, the deformation arrangement 230 further comprises a second portion 134. The second portion 134 may be connected to the retention portion 220.

The deformation arrangement 230 may be folded at a folding axis F. The folding axis F may be at least partially orthogonal with the opening direction O. The second portion 134 may be folded relative to the first portion 132 relative to the folding axis F. The second portion 134 may comprise the connection interface 138.

The second portion 134 of the deformation may be folded back over the first portion 132 of the deformation arrangement 230. Hence, the first portion 132 and the second portion 134 may extend substantially parallel to each other. Further, the first portion 132 and the second portion 134 may extend opposite to each other in a direction extending at least partially orthogonally to folding axis F. In the depicted example, the first portion 132 may be configured to be arranged between the second portion 134 and the track 110.

The deformation arrangement 230 may have a folded extension L extending between the retention portion 220 and the folding axis F, advantageously, the folded extension L may extend at least partially in the opening direction O.

The second portion 134 of the deformation arrangement 230 may comprise the connection interface 138 configured to fixedly connect the retention portion 220 to the deformation arrangement 230. The connection interface 138 may comprise a hole extending through the second portion 134 of the deformation arrangement 230. The fastening element extending through the hole may extend through an aperture in the first portion 132.

The folded design of the deformation arrangement allows for a space-efficient and non-complex manner of absorbing kinetic energy of the drawer 20. When the drawer 20 is in the retained position and a collision or abrupt stop of the vehicle occurs, the drawer 20 will exert a load onto the retaining arrangement 200 via the connection between the retaining member 210 and the drawer 20. The load will cause a tensile force to be exerted on the retaining member 210 due to the retention portion 220 being in engagement with the retention interface 120. Due to the weakened portion formed by the fold, the second portion 134 will unfold, shift and/or buckle relative the first portion 132 as a result of the tensile force to achieve the intended deformation of the deformation arrangement 230 and damping the movement of the drawer 20.

Further, in Fig. 4 a portion of the track 110 is visible. The track is formed as an indentation in a profile member of the structure 100. In the floor of the track 110 one of the one or more retention interfaces 120C is formed. It can be seen in Fig. 4 that the retention interface 120C is formed as a recess in the track 110. The recess is wider at the opening and narrower toward the bottom of the recess.

In Fig. 5 a top view of an exemplary embodiment of the deformation arrangement is depicted. Referencing Fig. 5, the retention portion 220 may have a wider head portion 222 and a narrower neck 224 portion. The head portion 222 of the retention portion may be configured to fit in the wider opening of the recess of the retention interface 120C. The neck portion 224 of the retention portion 220 may be configured to fit the narrower bottom of the recess of the retention interface 120C. The head portion 222 of the retention portion 220 may be too wide to pass through the narrower bottom of the recess of the retention interface 120C. The retention portion 220 may thereby be retained in a direction at least partially orthogonal to the opening direction O when it is engaged with the retention interface 120C.

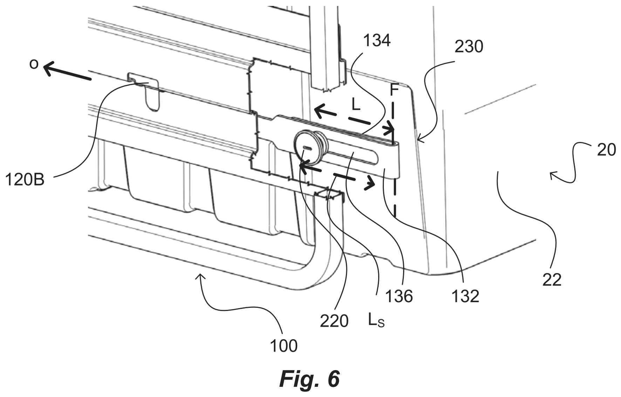

In Fig. 5, it can be seen that the retention portion 220 may extend through the first portion 132 of the deformation arrangement 230. In Fig. 6 this is illustrated from another angle. In Fig. 6, the first portion 132 is facing forward.

Referencing Fig. 6, the first portion 132 of the deformation arrangement 230 may comprise a slot 136. The slot 136 may extend a distance L_{S} in the opening direction O. The retention portion 220 may be configured to extend through the slot 136 and at least part of the distance L_{S} of the slot 136 may extend between the retention portion and the folding axis F.

Under normal use conditions, the retention portion 220 may be securely fixed relative to the first portion 132, withstanding the typical forces encountered during normal or even rough handling of the retaining arrangement 200 by a user. However, in the event of a crash or an extreme force impact, the retention portion 220 may be configured to be guided along the slot 136 of the first portion 132 in a controlled manner. The controlled movement of the retention portion 220 relative the first portion 132 may allow the deformation arrangement 230 to unfold, shift and/or buckle to absorb energy, reduce damage, and thereby enhance safety of the retaining arrangement. In a crash event the slot may enable the deformation arrangement 230 to deform relatively easily, further safeguarding that the intended deformation takes place.

Preferably, the slot 136 is implemented in a deformation arrangement 230 with the folded design previously described. Accordingly, the second portion 134 may comprise the connection interface 138. The retention portion 220 may be configured to extend through the slot of the first portion 132 such that said retention portion 220 is guidable along said slot 136. Thus, upon unfolding and/or buckling of the second portion 134 relative to the first portion 132, the retention portion 220 may be guided along the slot 138. The guiding of the retention portion 220 along the slot may allow for a more controlled deformation behaviour and a more reliable retaining arrangement 200.

Notably, the fixed connection of the retention portion 220 to the second portion 134 of the deformation arrangement 230 may prevent the retention portion 220 to slide along the slot 136 unless the deformation arrangement is deformed, e.g. the second portion 134 is unfolded and/or buckled relative the first portion 132.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims or embodiments, these may possibly advantageously be combined, and the inclusion of different claims or embodiments does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. Retaining arrangement (200) for a vehicle storage system (1000) for a vehicle, wherein the retaining arrangement (200) is configured to retain a drawer (20) of the vehicle storage system (1000) in one or more retained positions in relation to a support structure (100) of the vehicle storage system (1000), wherein the retaining arrangement (200) comprises:
a retention portion (220) configured to engage with a retention interface (120A-C) of the vehicle storage system (1000) and thereby retain the drawer (20) in one of the one or more retained positions;
a retaining member (210) configured to be connected to the drawer (20) and connected to the retention portion (220); and
a deformation arrangement (230) connecting the retaining member (210) and the retention portion (220), wherein the deformation arrangement (230) forms a weakened portion of the retaining arrangement (200).

2. The retaining arrangement (200) according to claim 1, wherein the retaining arrangement (200) is configured to absorb at least part of a kinetic energy of the drawer (20) by deforming when the drawer (20) is in said one or more retained positions.

3. The retaining arrangement (200) according to claim 2, wherein the deformation arrangement (230) is configured to deform to absorb at least part of the kinetic energy of the drawer (20) for mitigating movement of the drawer (20) extending at least partially in an opening direction (O) of the drawer (20).

4. The retaining arrangement (200) according to any of the preceding claims, wherein the retaining member (210) extends around at least part of a front of the drawer (20) and along at least part of a side of the drawer (20).

5. The retaining arrangement (200) according to claim 4, wherein the retaining member (210) extends around the front of the drawer (20) and along at least part of both sides of the drawer (20).

6. The retaining arrangement (200) according to any of the preceding claims, wherein the retaining arrangement (200) comprises a first and second retention portion (220) and a first and second deformation arrangement (230) configured to be arranged on a first and second side of the drawer (20), respectively, wherein the second side is opposite to the first.

7. The retaining arrangement (200) according to any one of the preceding claims, wherein the retention portion (220) is configured to be pivotably connected to the drawer (20) and the retention portion (220) is fixedly connected to the retaining member (210) such that pivoting of the retaining member (210) causes the retention portion to disengage from the retention interface (120A-C) when the drawer (20) is in one of the one or more retained positions.

8. The retaining arrangement (200) according to any of the preceding claims, wherein the retaining arrangement (200) comprises a handle (22) connected to the retaining member (210) and the retaining member (210) is actuatable by said handle (22) for disengaging the retention portion (220) from the retention interface (120A-C) when the drawer (20) is in one of the one or more retained positions.

9. The retaining arrangement (200) according to any of the preceding claims, wherein one of the retention portion (220) and the retention interface (120A-C) comprises a retention element, and the other of the retention portion (220) and the retention interface (120A-C) comprises a recess, wherein the recess is configured to retain the retention element in one of the one or more retained positions.

10. The retaining arrangement (200) according to any of the preceding claims, wherein the one or more retention interfaces (120A-C) are formed along a track (110) of the support structure (100) of the vehicle storage system (1000) and the drawer (20) is movably mounted to said track (110).

11. The retaining arrangement (200) according to claim 10, wherein the retention portion (220) is configured to be movably guided in the track (110).

12. A vehicle storage system (1000) comprising a drawer (20), a retaining arrangement (200) according to any of claims 1 to 11, and a support structure (100), the support structure (100) being configured to be arranged in a compartment (12) of a vehicle storage unit (1).

13. The vehicle storage system (1000) according to claim 12, wherein the support structure (100) of vehicle storage system (1000) comprises a track (110) and the drawer (20) is configured to move along the track (110) to move between an opened and closed position.

14. The vehicle storage system (1000) according to claim 12 or 13, wherein the support structure (100) comprises one or more retention interfaces (120A-C), and wherein the support structure (100) is configured to be arranged on an inner surface (14) of the compartment (12) of the vehicle storage unit (1).

15. A vehicle storage unit (1) for a vehicle cabin of a vehicle, the vehicle storage unit (1) comprising a frame (10), one or more compartments (12) formed in the frame (10) and one or more vehicle storage systems (1000) according to any of claims 12-14 arranged in one or more of the one or more compartments (12).
